# EUROPEAN PATENT APPLICATION

(11) **EP 1 933 058 A2**
(43) Date of publication of application: **18.06.2008**
(21) Application number: 07380328.0
(22) Date of filing: 26.11.2007
(51) Int. Cl.: F16F 1/12, F16F 9/12, F16F 13/00

(54) **Damping device for shafts**

(30) Priority: 13.12.2006 ES 200602680 U
(71) Applicant: Pladomin, S.A., 39012 Santander (ES)
(72) Inventor: Arino del Castillo, Norberto, 39012 Santander (ES)
(74) Representative: Canadell-Isern, Roberto

(57) **Abstract**

DAMPING DEVICE FOR SHAFTS, preferably automobile handle shafts, which includes two ferrules: an exterior stationary ferrule (1) and an interior moving ferrule (2), coaxially mounted in relation to each other. Both ferrules have fenders (1a), (2a), which form a double coaxiality between ferrules (1) and (2), establishing a large leak-tight chamber that houses a highly viscous lubricant (3). This assembly includes a torsion spring (5) that joins both ferrules (1) and (2), with the possibility of fastening this spring (5) in different positions to adjust its force, and the interior ferrule (2) is able to rotate on the exterior ferrule (1) with an opposing force produced by the highly viscous lubricant (3).

## Description

### OBJECT OF THE INVENTION

The object of this Invention is a damping device for shafts that contributes several advantages, which will be discussed hereinafter, to the function for which it is intended, apart from others inherent in its organization and constitution.

More specifically, in the invention a damping device with built-in spring has been devised for automobile handle shafts, e.g. such as those located above the door inside the automobile, in order to dampen the rotation of the shaft when the handle goes back to its stable position, preventing the impact of this backward movement and thus ensuring the handle's conservation, although this does not exclude other multiple and varying applications of the invention.

### BACKGROUND OF THE INVENTION

At present, there are numerous, differing types of systems on the market to dampen or brake the movement of all kinds of shafts, which are considerably enhanced by the damping device of the invention thanks to its improved technical, structural and functional characteristics, including the following:
Increased area of contact between interior and exterior ferrules as they have been conceived with dual coaxiality, which makes it possible to use a wider range of viscosities in the lubricating element and maintain the assembly with minimum dimensions.
Integration of a torsion spring. This makes it possible to simplify assembly of the system in different market applications. On the other hand, the possibility of fastening the spring in eight different positions, which makes it possible to adjust the force of the spring.

### DESCRIPTION OF THE INVENTION

The damping device for shafts, which is the object of this invention, consists of two ferrules: an exterior stationary ferrule and an interior moving ferrule that are coaxially mounted in relation to each other, with the peculiarity that both ferrules have fenders that form a double coaxiality between ferrules, establishing a large leak-tight chamber suitable for housing a highly viscous lubricant. This assembly has been designed to include a torsion spring that joins both ferrules, with the possibility of fastening the spring in different positions, thus making it possible to adjust the force of this spring.

In addition, the exterior stationary ferrule has on its outside an anti-rotation rib that prevents the angular movement of this exterior ferrule.

The interior ferrule is able to rotate on the exterior ferrule with an opposing force produced by the highly viscous lubricant. This force opposing the rotation may vary depending on the degree of viscosity of the lubricant and the surface areas of both ferrules.

To complement the description provided below and in order to help better understand the invention characteristics, this description is accompanied by a set of drawings whose figures show, on an illustrative but not limitative basis, the most significant details of the invention.

### BRIEF DESCRIPTION OF THE FIGURES

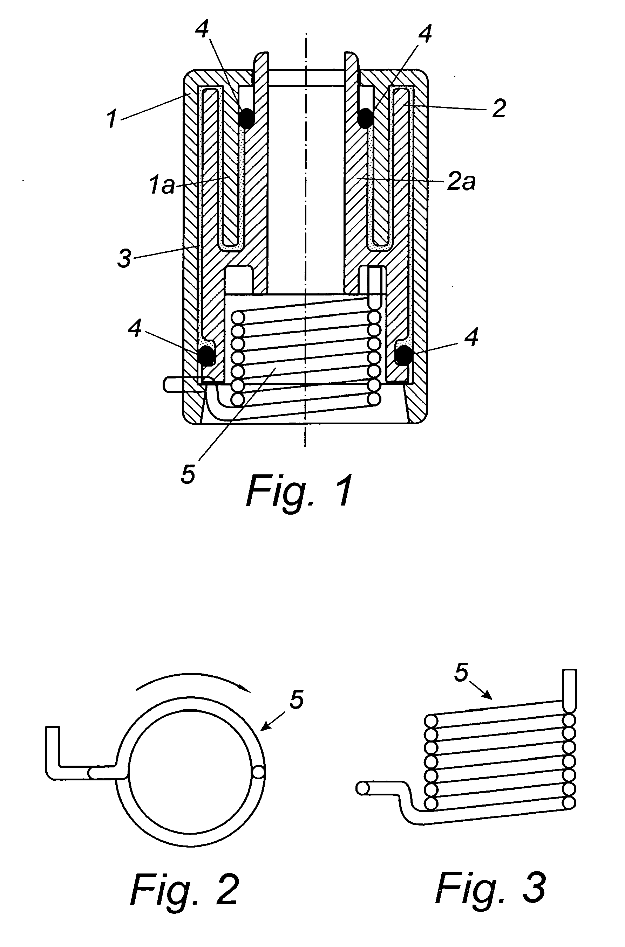

Figure 1. This shows a vertical cross-section view of the invention assembly.
Figures 2 and 3. These show a plan view and vertical view of the torsion spring.
Figure 4. This shows a view in perspective of the exterior stationary ferrule.
Figure 5. This shows a view in perspective of the interior moving ferrule.

### DESCRIPTION OF AN EXAMPLE OF INVENTION EXECUTION

In view of the above mentioned figures and in accordance with the numbering used, an illustrative, though not limitative, example of the invention can be observed. The invention consists of a damping device for shafts which, among other uses, is especially intended for automobile handle shafts, such as those located above the door inside the automobile.

This device includes two ferrules: an exterior stationary ferrule (1) and an interior moving ferrule (2) that are coaxially mounted in relation to each other, with the peculiarity that both ferrules have fenders (1a), (2a) that form a double coaxiality between ferrules (1) and (2), establishing a large chamber suitable for housing a highly viscous lubricant (3), the leak tightness of which is guaranteed by means of ring seals (4). This assembly has been designed to include a torsion spring (5) that joins both ferrules (1) and (2), with the possibility of fastening the spring (5) in different positions, thus making it possible to adjust its force.

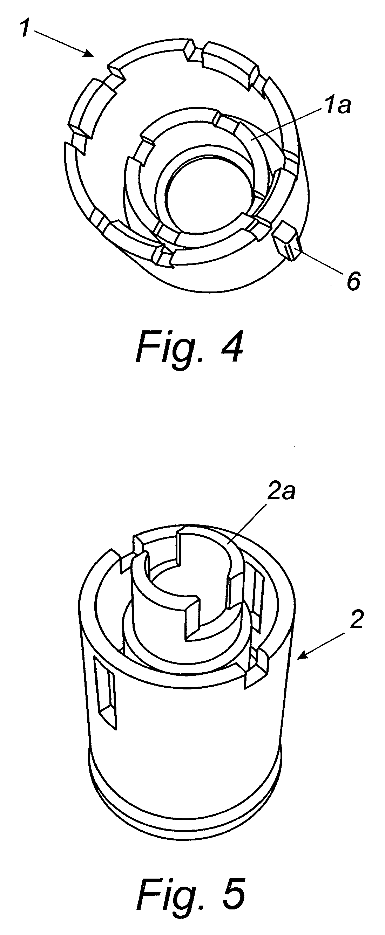

As indicated in figure 4, the exterior stationary ferrule (1) has on its outside an anti-rotation rib (6) that prevents the angular movement of this exterior ferrule (1).

The interior ferrule (2) is able to rotate on the exterior ferrule (1) with an opposing force produced by the highly viscous lubricant (3). This force opposing the rotation is variable depending on the degree of viscosity of the lubricant (3) and the surface areas of both ferrules (1) and (2).

## Claims

1. DAMPING DEVICE FOR SHAFTS, intended, for example, for automobile handle shafts, such as the handles located above the door inside the automobile, essentially **characterized by** the fact that it includes two ferrules, an exterior stationary ferrule (1) and an interior moving ferrule (2), coaxially mounted in relation to each other, with the peculiarity that both ferrules have fenders (1a), (2a) that form a double coaxiality between ferrules (1) and (2), establishing a large leak-tight chamber suitable for housing a highly viscous lubricant (3), that this assembly has been designed to include a torsion spring (5) that joins both ferrules (1) and (2), with the possibility of fastening the spring (5) in different positions, thus making it possible to adjust its force, and that the interior ferrule (2) is able to rotate on the exterior ferrule (1) with an opposing force produced by the highly viscous lubricant (3).

2. DAMPING DEVICE FOR SHAFTS, according to claim 1, **characterized by** the fact that the exterior stationary ferrule (1) has on its outside an anti-rotation rib (6) suitably located to prevent the angular movement of this exterior ferrule (1).
